# EUROPÄISCHE PATENTSCHRIFT

(11) **EP 2 735 749 B1**
(45) Veröffentlichungstag und Bekanntmachung des Hinweises auf die Patenterteilung: **09.12.2015**
(21) Anmeldenummer: 13180948.5
(22) Anmeldetag: 20.08.2013
(51) Int. Cl.: F16C 19/18, F16C 33/58, F16C 33/60

(54) **Wälzlagereinheit für eine Landmaschine**
Roller bearing unit for an agricultural machine
Unité de palier à roulement pour une machine agricole

(30) Priorität: 23.11.2012 DE 102012221469
(43) Veröffentlichungstag der Anmeldung: 28.05.2014
(73) Patentinhaber: Schaeffler Technologies AG & Co. KG, 91074 Herzogenaurach (DE)
(72) Erfinder: Soares, Fabiano Miguel, 18078-110 Sorocaba (BR); Costa, Maria Claudia, 18071-040 Sorocaba (BR); Barbosa, Alessandro, 13304-276 Itu (BR)

(56) Entgegenhaltungen:
- EP-A1- 1 672 230
- EP-A1- 2 037 134
- EP-A1- 2 278 179
- WO-A1-2012/104300
- DE-A1- 10 359 644
- DE-T5-112008 000 830

## Beschreibung

### Gebiet der Erfindung

Die Erfindung betrifft eine Wälzlagereinheit, insbesondere eine Wälzlagereinheit zur Aufnahme von landwirtschaftlichen Werkzeugen.

### Hintergrund der Erfindung

Bei landwirtschaftlichen Maschinen kommen Wälzlager beispielsweise als Träger von Saatscheiben, Pflugscheiben und ähnlichen Werkzeugen zum Einsatz. Solche landwirtschaftlichen Werkzeuge werden beispielsweise zum Einbringen von Saatgut in Bodenfurchen eingesetzt, die in einem Arbeitsschritt in dem Boden eingeformt und nach dem Einbringen des Saatgutes wieder geschlossen werden. Die hierbei eingesetzten Lager sind geringeren mechanischen Belastungen als beispielsweise im Kraftfahrzeugbereich ausgesetzt.

Meist werden die in der Landwirtschaft eingesetzten Wälzlager in Form von abgeschlossenen Wälzlagereinheiten hergestellt, die einerseits eine Wälzlagerfunktion aufweisen und andererseits im Sinne einer Bauteilintegration bereits Aufnahmen oder Befestigungsmittel für landwirtschaftliche Werkzeuge umfassen. Trotz einer solchen Bauteilintegration in bestehende Wälzlager sind allerdings die Herstellkosten solcher kompletten Wälzlagereinheiten vergleichsweise hoch. Aus der DE 103 59 644 A1 ist eine gattungsgemäße Wälzlagereinheit bekannt.

### Aufgabe der Erfindung

Der Erfindung liegt die Aufgabe zugrunde, eine Wälzlagereinheit mit reduzierten Herstellkosten anzugeben.

### Zusammenfassung der Erfindung

Diese Aufgabe wird erfindungsgemäß gelöst durch eine Wälzlagereinheit für eine Landmaschine mit den Merkmalen des Anspruchs 1. Vorteilhafte und teils für sich erfinderische Ausführungsformen und Weiterentwicklungen der Erfindung sind in den Unteransprüchen und der nachfolgenden Beschreibung dargelegt.

Erfindungsgemäß umfasst die Wälzlagereinheit einen Innenring, an dem mindestens eine innere (d.h. radial innenseitige) Lauffläche ausgebildet ist, sowie eine Anzahl von Wälzkörpern, die in Umfangsrichtung über die Lauffläche des Innenrings verteilt sind. Des Weiteren umfasst die Wälzlagereinheit einen Außenring, der auf den Wälzkörpern koaxial um den Innenring rotierbar gelagert ist und der Befestigungsmittel zur Halterung eines Anbauteils aufweist. Erfindungsgemäß ist der Außenring (zumindest) zweiteilig ausgebildet. Der Außenring umfasst dabei einen Ringkörper und einen die Innenfläche des Ringkörpers zumindest teilweise abdeckenden Laufflächeneinsatz aus Blech. In dem Laufflächeneinsatz ist mindestens eine äußere (d.h. radial außenseitige) Lauffläche für die Wälzkörper ausgeformt.

Der Laufflächeneinsatz ist zweckmäßigerweise als Blechbuchse ausgeführt, wobei diese koaxial in den Außenring eingepresst ist.

Dadurch, dass die Lauffläche in dem Laufflächeneinsatz ausgebildet ist, kann eine kostenintensive, präzise Fertigung (beispielsweise durch Drehen und Schleifen) der Lauffläche in dem vorzugsweise massiv ausgeführten Ringkörper vermieden werden bzw. entfallen. Bei der erfindungsgemäßen Wälzlagereinheit ist es vielmehr nun möglich, den Ringkörper nicht oder zumindest lediglich vergleichsweise grob zu bearbeiten, sodass der Laufflächeneinsatz in dem Ringkörper montiert bzw. eingepresst werden kann. Die Herstellung des Laufflächeneinsatzes aus Blech ist dabei erkanntermaßen kostengünstiger als eine Innenbearbeitung des Ringkörpers. Ferner ermöglicht die Verwendung des Laufflächeneinsatzes, dass der Ringkörper aus einem im Vergleich zu einem hochwertigen Wälzlagerstahl günstigen Material hergestellt werden kann.

Um ein einfaches Einschieben oder Einpressen des Laufflächeneinsatzes in den Ringkörper zu ermöglichen, weist der Laufflächeneinsatz in vorteilhafter Ausführung an wenigstens einem Axialende mindestens eine Kerbe auf. Die oder jede Kerbe ist dabei beispielsweise als axialer Einschnitt in den Rand des Laufflächeneinsatzes ausgebildet. Die oder jede Kerbe ist zudem zweckmäßigerweise außerhalb der Lauffläche angeordnet. Aufgrund der oder jeder Kerbe ist die Flexibilität des Laufflächeneinsatzes im Randbereich derart erhöht, dass das Einschieben bzw. Einpressen des Laufflächeneinsatzes in den Ringkörper erleichtert ist. Vorzugsweise weist der Laufflächeneinsatz an beiden Axialenden jeweils mindestens eine Kerbe, insbesondere jeweils mehrere über den Umfang des Laufflächeneinsatzes verteilte Kerben auf.

Die oder jede Kerbe bewirkt zudem eine Verdrehsicherung des Laufflächeneinsatzes in dem Ringkörper, da sich, insbesondere bei einem Presssitz des Laufflächeneinsatzes, die Kanten der oder jeder Kerbe zumindest geringfügig in die Innenfläche des Ringkörpers eingraben und dadurch zu einem Formschluss zwischen dem Ringkörper und dem Laufflächeneinsatz in Umfangsrichtung führen. Zusätzlich oder alternativ ist vorzugsweise die Innenfläche des Ringkörpers zur Verdrehsicherung des Laufflächeneinsatzes zumindest teilweise strukturiert, beispielsweise durch eine Rändelung, wodurch ebenfalls Formschluss oder zumindest eine erhöhte Reibung zwischen dem Laufflächeneinsatz und dem Ringkörper bewirkt wird. Vorzugsweise sind für eine verbesserte Verdrehsicherung an dem Laufflächeneinsatz und an dem Ringkörper ineinandergreifende Strukturen vorgesehen. Beispielsweise ist die Struktur des Ringkörpers in Form einer oder mehrerer von der Innenfläche vorspringender, insbesondere schmaler, Nasen oder in Form einer oder mehrerer Vertiefungen (bspw. Rillen) ausgeführt, die jeweils mit einer Kerbe des Laufflächeneinsatzes im Eingriff stehen.

Unter dem Begriff "Landmaschine" wird hier und im Folgenden insbesondere eine Pflanz- oder Saatmaschine verstanden. Solche Landmaschinen werden regelmäßig von Zugmaschinen über zu bestellende landwirtschaftlichen Nutzflächen gezogen. Als Anbauteile für die erfindungsgemäße Wälzlagereinheit kommen dabei herkömmlicherweise Andruckrollen, Saatscheiben, Pflugscheiben etc. zum Einsatz. Zur Befestigung solcher Anbauteile weist der Ringkörper in zweckmäßiger Ausgestaltung einen radial auskragenden Flansch als Befestigungsmittel auf, mit dem diese Anbauteile verschraubt werden können.

Um den Laufflächeneinsatz gegen ein Verschieben in axialer Richtung zu sichern, ist in bevorzugter Ausführung der Wälzlagereinheit der Laufflächeneinsatz axial beidseitig gegen jeweils mindestens einen Axialanschlag abgestützt, der an der Innenfläche des Ringkörpers radial nach innen absteht. Um den Laufflächeneinsatz insbesondere ohne axiales Spiel in dem Ringkörper zu lagern, entspricht der axiale Abstand der beiden Axialanschläge dabei vorteilhafterweise der Breite des Laufflächeneinsatzes. In zweckmäßiger Ausführung ist in dem Ringkörper eine umlaufende Vertiefung oder Nut eingeformt, deren Seitenwände jeweils einen der Axialanschläge bilden. Im Rahmen der Erfindung können die (umlaufenden) Seitenwände optimal mehrfach unterbrochen sein, so dass an jedem Axialende des Ringkörpers jeweils mehrere Axialanschläge gebildet sind.

Des Weiteren ist der maximale Außendurchmesser des Laufflächeneinsatzes zweckmäßigerweise größer ausgeführt als der minimale Innendurchmesser des Ringkörpers, so dass der Laufflächeneinsatz bei der Montage in den Ringkörper einzupressen ist. Insbesondere ist der Laufflächeneinsatz auch in der gegebenenfalls vorhandenen Nut mit einer geringen Spiel- oder einer Übermaßpassung gelagert. Bei zweckmäßiger Dimensionierung der Nutbreite und Nuttiefe ist nach der Montage des Laufflächeneinsatzes somit eine feste, quasi-unlösbare Einheit aus Ringkörper und Laufflächeneinsatz gebildet.

Um die durch die Wälzkörper in die Lauffläche eingebrachten punkt- oder linienförmigen Lasten aufnehmen zu können, ist der Laufflächeneinsatz in bevorzugter Ausführung aus einem Wälzlagerstahl hergestellt. Bevorzugt handelt es sich bei diesem Wälzlagerstahl um 100Cr6.

Im Rahmen der Erfindung ist es dabei denkbar, dass der Laufflächeneinsatz durch spanabhebende Fertigungsverfahren und/oder aus einem rohrförmigen Halbzeug hergestellt ist. Alternativ ist der Laufflächeneinsatz aus einem ebenen Blech hergestellt. Insbesondere ist die Kontur der oder jeder Lauffläche dabei durch ein Verfahren der Blechumformung, beispielsweise durch Tiefziehen, Walzen oder Rollieren, ausgeformt.

In vorteilhafter Ausführung ist der Ringkörper insbesondere als Gussbauteil beispielsweise aus Gussstahl ausgeführt. Gießen sowie die Verwendung von Gussstahl ermöglicht dabei eine besonders kostengünstige Herstellung des (massiven) Ringkörpers und somit auch, in Kombination mit dem (dünnwandigen) Laufflächeneinsatz aus hochwertigem Material, des gesamten Außenrings.

In einer weiteren vorteilhaften Ausführungsform der Erfindung weisen sowohl der Innenring als auch der Laufflächeneinsatz jeweils zwei axial nebeneinander angeordnete und in einem Winkel zueinander angestellte Laufflächen auf. Mit anderen Worten handelt es sich bei der erfindungsgemäßen Wälzlagereinheit um ein doppelreihiges Schrägwälzlager. Im Rahmen der Erfindung ist es dabei denkbar, dass der Innenring aus zwei axial aneinandergesetzten Ringsegmenten zusammengesetzt ist. Der Einsatz zweier zueinander angestellter Laufflächen ermöglicht vorteilhafterweise, dass mittels lediglich einer Wälzlagereinheit sowohl radiale Lasten als auch axial wirkende Lasten aufgenommen werden können.

Als Wälzkörper kommen vorzugsweise Kugeln zum Einsatz. In diesem Fall sind in vorteilhafter Ausführung der Erfindung die Laufflächen sowohl des Innenrings als auch des Laufflächeneinsatzes jeweils insbesondere rinnenförmig nach innen bzw. nach außen gewölbt. Der Radius der Wölbung entspricht dabei vorteilhafterweise im Wesentlichen dem Radius der Kugeln. Im Rahmen der Erfindung ist es allerdings auch denkbar, dass die Wälzkörper beispielsweise als Zylinderrollen oder Kegelrollen ausgeführt sind, wobei in diesen Fällen die Laufflächen im (parallel zur Rotationsachse gelegenen) Querschnitt gesehen als Geradenabschnitte ausgeführt sind.

Die erfindungsgemäße Wälzlagereinheit bietet darüber hinausgehend den Vorteil, dass diese auf besonders einfache und kostengünstige Weise zur Aufnahme unterschiedlicher Werkzeuge angepasst werden kann. Beispielsweise wird dabei lediglich die Außenkontur, d.h. insbesondere die Befestigungsmittel, des Ringkörpers verändert, wobei insbesondere dessen Innendurchmesser bzw. die Ausführung der Innenfläche zur Aufnahme des Laufflächeneinsatzes beibehalten werden.

### Kurze Beschreibung der Zeichnungen

Nachfolgend werden Ausführungsbeispiele der Erfindung anhand einer Zeichnung näher erläutert. Darin zeigen:
- Fig. 1: in einer Schnittdarstellung eine Wälzlagereinheit mit einem Innenring, mehreren Wälzkörpern und einem Außenring, der aus einem Ringkörper und einem Laufflächeneinsatz gebildet ist,
- Fig. 2: in vergrößerter Darstellung den Außenring der Wälzlagereinheit gemäß Fig. 1,
- Fig. 3: in Darstellung gemäß Fig. 1 ein alternatives Ausführungsbeispiel der Wälzlagereinheit ohne Innenring und Wälzkörper,
- Fig. 4: in Darstellung gemäß Fig. 3 ein weiteres Ausführungsbeispiel der Wälzlagereinheit, und
- Fig. 5: in Darstellung gemäß Fig. 3 wiederum ein weiteres Ausführungsbeispiel der Wälzlagereinheit.

Einander entsprechende Teile sind in allen Figuren stets mit gleichen Bezugszeichen versehen.

### Detaillierte Beschreibung der Zeichnungen

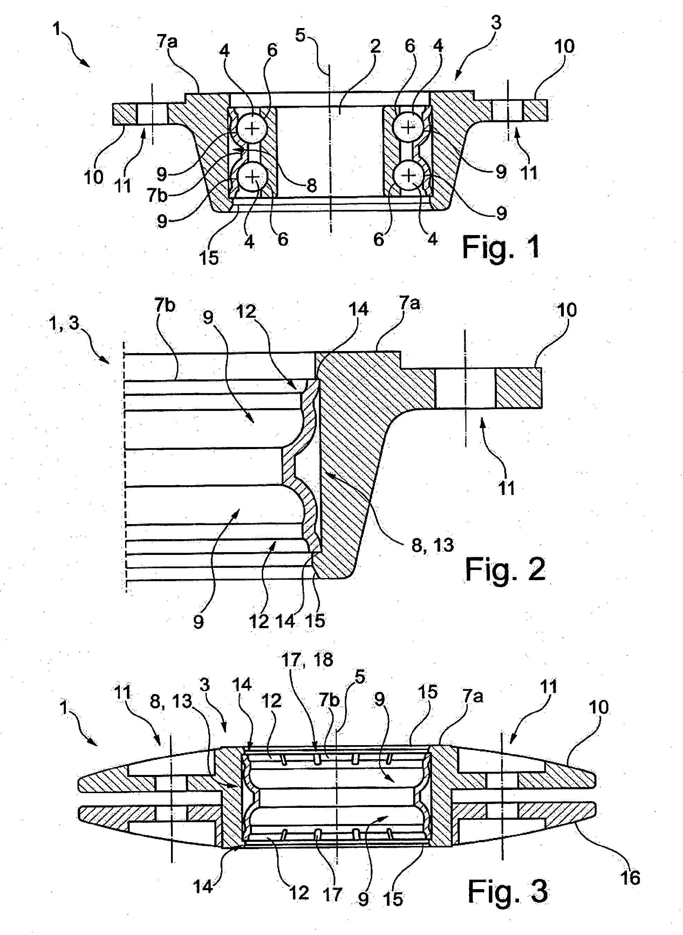

In Fig. 1 ist eine Wälzlagereinheit 1 dargestellt. Die Wälzlagereinheit 1 umfasst einen Innenring 2 und einen koaxial zu diesem angeordneten Außenring 3. Zwischen dem Außenring 3 und dem Innenring 2 sind Wälzkörper in Form von Kugeln 4 angeordnet, sodass der Außenring 3 relativ zu dem Innenring 2 um eine Rotationsachse 5 drehbar gelagert ist. Um die Kugeln 4 entlang einer Umfangslinie des Innenrings 2 führen zu können, sind auf der Außenseite des Innenrings 2 zwei rillenförmige Laufbahnen 6 eingeformt, in denen die Kugeln 4 einliegen. Der Außenring 3 ist zweiteilig ausgeführt und umfasst dabei einen Ringkörper 7a und einen Laufflächeneinsatz 7b, der an einer Innenfläche 8 des Ringkörpers 7a angeordnet ist. In dem Laufflächeneinsatz 7b sind dabei radial innenseitig wiederum zwei Laufbahnen 9 ausgeformt, die den Laufbahnen 6 des Innenrings 2 gegenüber liegen.

Des Weiteren umfasst die Wälzlagereinheit 1 Befestigungsmittel für ein landwirtschaftliches Werkzeug, beispielsweise eine Saatscheibe (nicht dargestellt). Die Befestigungsmittel sind in Form eines radial auskragenden Flansches 10 an der Außenseite des Ringkörpers 7a einstückig angeformt. In dem Flansch 10 sind Montagelöcher 11 eingeformt, die beispielsweise für eine Schraubverbindung mit dem Werkzeug vorgesehen sind.

Der Ringkörper 7a ist als Gussbauteil, insbesondere aus Gussstahl, ausgeführt. Der Laufflächeneinsatz 7b ist hingegen aus einem Wälzlagerstahl, insbesondere 100Cr6, gefertigt, und weist dadurch eine für die Führung der Kugeln 4 und Aufnahme der Lagerlasten erforderliche Härte auf. Der Laufflächeneinsatz 7b sowie dessen Laufflächen 9 werden dabei beispielsweise durch Tiefziehen und/oder Walzen eines blechförmigen Halbzeugs hergestellt.

Wie aus Fig. 1 und Fig. 2 ersichtlich ist, ist die Wälzlagereinheit 1 als doppelreihiges Schrägkugellager ausgebildet. Die Schrägstellung der Laufbahnen 9 des Laufflächeneinsatzes 7b wird dabei dadurch erreicht, dass der Laufflächeneinsatz 7b im Wesentlichen der Form eines gleichschenkligen Dreiecks nachgebildet ist. Die Laufbahnen 9 sind dabei durch eine radial auswärts weisende Wölbung der beiden gleich langen Schenkel des Dreiecks gebildet. An beiden axialen Enden weist der Laufflächeneinsatz 7b jeweils einen Bund 12 auf, der gegenüber den Laufflächen 9 radial nach außen versetzt ist. Mit diesem Bund 12 steht der Laufflächeneinsatz 7b auf der Innenfläche 8 des Ringkörpers 7a auf. Aufgrund des grob dreieckigen Querschnitts ist zwischen der Innenfläche 8 des Ringkörpers 7a und dem Laufflächeneinsatz 7b ein Hohlraum gebildet, durch den gegenüber einem massiv ausgeführten (einstückigen) Lagerring Material eingespart ist. Somit ist das Gewicht der Wälzlagereinheit 1 gegenüber einer Ausführung mit massiven Lagerringen verringert.

Aus Fig. 2 ist weiterhin zu erkennen, dass der Laufflächeneinsatz 7b in einer Nut 13, die in der Innenfläche 8 des Ringkörpers 7a eingeformt ist, einliegt. Die beiden Seitenwände der Nut 13 bilden dabei vorteilhafterweise jeweils einen Axialanschlag (nachfolgend kurz: Absatz 14), an dem der Laufflächeneinsatz 7b mit seinem Bund 12 in axialer Richtung anliegt. Dadurch ist der Laufflächeneinsatz 7b vorteilhafterweise in beide axialen Richtungen spielfrei gelagert bzw. fixiert. Vorzugsweise ist der Laufflächeneinsatz 7b gegen beide Absätze 14 verspannt, sodass ein Durchbiegen der Laufflächen 9 unter Belastung verhindert oder zumindest verringert ist.

Zur Montage wird der Laufflächeneinsatz 7b in die Nut 13 in axialer Richtung eingepresst. Um das Einpressen des Laufflächeneinsatzes 7b zu erleichtern, weist der Ringkörper 7a an wenigstens einem axialen Ende radial innenseitig eine Fase auf, die im Folgenden als Einpressschräge 15 bezeichnet wird. Wie in Fig. 2 zu erkennen ist, ist der Laufflächeneinsatz 7b derart dimensioniert, dass sein Außendurchmesser größer ist als der durch die Absätze 14 gebildete minimale Innendurchmesser des Ringkörpers 7a. In vorteilhafter Dimensionierung weist der Laufflächeneinsatz 7b zudem einen gegenüber dem Innendurchmesser der Nut 13 größeren Außendurchmesser auf. Dadurch wird erreicht, dass der Laufflächeneinsatz 7b in dem Ringkörper 7a mit einem sogenannten Presssitz (Übermaßpassung) montiert ist. Der Außenring 3 ist somit als nahezu unlösbare Einheit aus dem Ringkörper 7a und dem Laufflächeneinsatz 7b gebildet.

In Fig. 3 ist ein alternatives Ausführungsbeispiel der Wälzlagereinheit 1 dargestellt. Die Wälzlagereinheit 1 umfasst hierbei zusätzlich einen Spannring 16, der bei der Montage des landwirtschaftlichen Werkzeugs als Gegenhalter zu dem Flansch 10 dient. Zudem weist der Ringkörper 7a axial beidseitig die Einpressschräge 15 auf. Um die Montage bzw. das Einpressen des Laufflächeneinsatzes 7b weiter zu erleichtern, sind in dem Laufflächeneinsatz 7b im Bereich des Bundes 12 mehrere axial ausgerichtete Kerben 17 eingebracht. Durch die Kerben 17 wird die Steifigkeit des ringförmigen Laufflächeneinsatzes 7b in dem Bereich des Bundes 12 verringert, da die zwischen den Kerben 17 liegenden Abschnitte des Bundes 12 sich unabhängig voneinander radial nach innen oder außen biegen können. Dadurch ist eine vergleichsweise geringe Montagekraft erforderlich, um den Bund 12 des Laufflächeneinsatzes 7b über den Absatz 14 des Ringkörpers 7a zu schieben.

Des Weiteren dienen die Kerben 17 vorteilhafterweise dazu, den Laufflächeneinsatz 7b gegen ein Verdrehen in dem Ringkörper 7a zu sichern. Dazu sind auf (wenigstens) einer Seite der Nut 13 Nasen 18 angeordnet, die komplementär zu den Kerben 17 ausgeführt sind. Diese Nasen 18 liegen in dem in Fig. 3 dargestellten Montagezustand in den Kerben 17 ein, sodass der Laufflächeneinsatz 7b verdrehsicher in dem Ringkörper 7a gelagert ist.

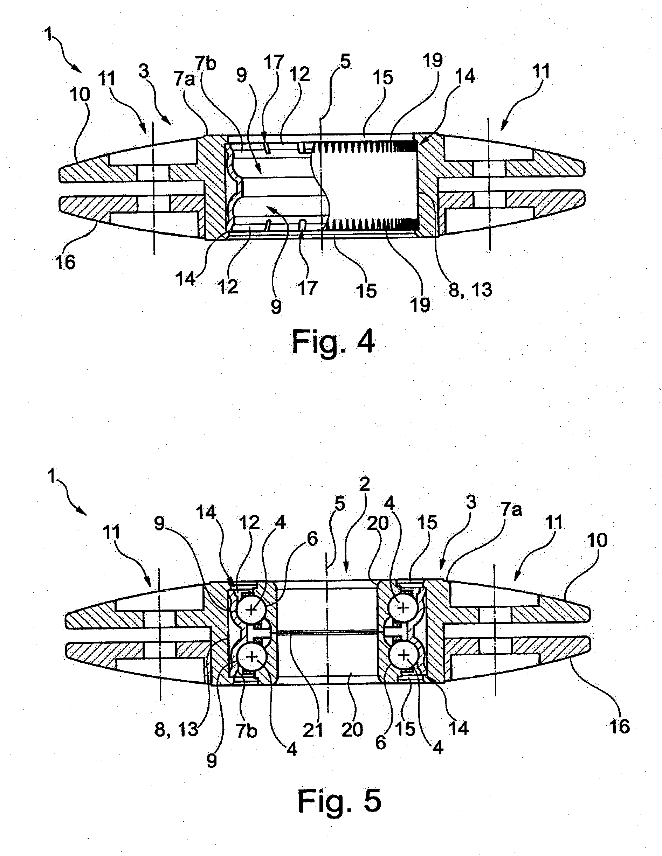

In dem Ausführungsbeispiel der Wälzlagereinheit 1 gemäß Fig. 4 ist eine weitere Möglichkeit zur Verdrehsicherung des Laufflächeneinsatzes 7b dargestellt. Der Laufflächeneinsatz 7b ist dabei wiederum mit den Kerben 17 ausgeführt. In dem Ringkörper 7a sind am Übergang der Nut 13 zu den Absätzen 14 mehrere Vertiefungen 19 ausgebildet. Die Vertiefungen 19 sind dabei axial ausgerichtet und entsprechen in ihrer Länge etwa der Länge der Kerben 17 in dem Laufflächeneinsatz 7b. Aufgrund der durch die Kerben 17 verringerten Steifigkeit des Bundes 12 ist es möglich, dass sich ein zwischen zwei Kerben 17 liegender Abschnitt des Bundes 12 über einer der Vertiefungen 19 geringfügig radial nach außen wölbt, sodass der Rand einer der Kerben 17 mit dieser Vertiefungen 19 verrastet und dadurch den Laufflächeneinsatz 7b gegen Verdrehen sichert. Diese Art der Verdrehsicherung des Laufflächeneinsatzes 7b ist insbesondere für den Fall zweckmäßig, dass der Laufflächeneinsatz 7b mit einem Presssitz in der Nut 13 montiert ist. Durch den Presssitz des Laufflächeneinsatzes 7b wird hierbei auf einfache Weise erreicht, dass der Bund 12 bzw. die zwischen den Kerben 17 liegenden Abschnitte des Bundes 12 radial nach außen gegen die Grundfläche der Nut 13 verspannt sind, und dadurch die Ränder der Kerben 17 mit den Vertiefungen 19 in Eingriff stehen.

Ein weiteres Ausführungsbeispiel der Wälzlagereinheit 1 ist in Fig. 5 in einem Endmontagezustand dargestellt. Der Innenring 2 ist hierbei als zweiteiliger Innenring ausgeführt. Mit anderen Worten ist der Innenring 2 aus zwei Ringsegmenten 20 entlang einer senkrecht zur Rotationsachse 5 verlaufenden Trennlinie 21 zusammengesetzt. Jedes der Ringsegmente 20 weist dabei eine der beiden Laufbahnen 6 auf. Der geteilte Innenring 2 dient dabei einer vereinfachten Montage des Innenrings 2 sowie der Wälzkörper 4 in dem Außenring 3.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Wälzlagereinheit
- 2: Innenring
- 3: Außenring
- 4: Kugel
- 5: Rotationsachse
- 6: Laufbahn
- 7a: Ringkörper
- 7b: Laufflächeneinsatz
- 8: Innenfläche
- 9: Laufbahn
- 10: Flansch
- 11: Montageloch
- 12: Bund
- 13: Nut
- 14: Absatz
- 15: Einpressschräge
- 16: Spannring
- 17: Kerbe
- 18: Nase
- 19: Vertiefung
- 20: Ringsegment
- 21: Trennlinie

## Patentansprüche

1. Wälzlagereinheit (1) für eine Landmaschine,
mit einem Innenring (2), an dem mindestens eine innere Lauffläche (6) ausgebildet ist,
mit einer Anzahl von Wälzkörpern (4), die in Umfangsrichtung über die Lauffläche (6) des Innenrings (2) verteilt sind, und
mit einem Außenring (3), der auf den Wälzkörpern (4) um den Innenring (2) rotierbar gelagert ist und der Befestigungsmittel (10) zur Halterung eines Anbauteils aufweist,
wobei der Außenring (3) einen Ringkörper (7a) und einen die Innenfläche (8) des Ringkörpers (7a) zumindest teilweise abdeckenden Laufflächeneinsatz (7b) aus Blech umfasst, wobei der Laufflächeneinsatz (7b) mindestens eine äußere Lauffläche (9) für die Wälzkörper (4) aufweist und wobei der Laufflächeneinsatz (7b) in den Ringkörper (7a) eingepresst ist,
**dadurch gekennzeichnet, dass** der Laufflächeneinsatz (7b) an wenigstens einem Axialende mehrere über den Umfang des Laufflächeneinsatzes verteilte Kerben (17) aufweist.

2. Wälzlagereinheit (1) nach Anspruch 1,
**dadurch gekennzeichnet,**
**dass** der Laufiflächeneinsatz (7b) axial beidseitig gegen jeweils mindestens einen radial nach innen ragenden Axialanschlag (14) des Ringkörpers (7a) abgestützt ist.

3. Wälzlagereinheit (1) nach Anspruch 1 oder 2,
**dadurch gekennzeichnet,**
**dass** der Ringkörper (7a) an seiner Innenfläche (8) mindestens eine Nase (18) aufweist, die zur Verdrehsicherung des Laufflächeneinsatzes (7b) in die Kerbe (17) eingreift.

4. Wälzlagereinheit (1) nach Anspruch 1 oder 2,
**dadurch gekennzeichnet,**
**dass** der Ringkörper (7a) an seiner Innenfläche (8) mindestens eine Vertiefung (19) aufweist, die zur Verdrehsicherung des Laufflächeneinsatzes (7b) mit einem Rand der Kerbe (17) in Eingriff steht.

5. Wälzlagereinheit (1) nach einem der Ansprüche 1 bis 4,
**dadurch gekennzeichnet,**
**dass** der Laufflächeneinsatz (7b) aus Wälzlagerstahl, insbesondere 100 Cr6, hergestellt ist.

6. Wälzlagereinheit (1) nach einem der Ansprüche 1 bis 5,
**dadurch gekennzeichnet,**
**dass** der Ringkörper (7a) als Gussbauteil, insbesondere aus Gussstahl, ausgebildet ist.

7. Wälzlagereinheit (1) nach einem der Ansprüche 1 bis 6,
**dadurch gekennzeichnet,**
**dass** die oder jede Lauffläche (9) des Laufflächeneinsatzes (7b) durch Blechumformung hergestellt ist.

8. Wälzlagereinheit (1) nach einem der Ansprüche 1 bis 7,
**dadurch gekennzeichnet,**
**dass** der Innenring (2) und der Laufflächeneinsatz (7b) jeweils zwei axial nebeneinander angeordnete und in einem Winkel zueinander angestellte Laufflächen (6,9) aufweisen.

## Claims

1. Roller bearing unit (1) for an agricultural machine,
with an inner ring (2) on which at least one inner running face (6) is formed,
with a number of rolling bodies (4) which are distributed in the circumferential direction over the running face (6) of the inner ring (2), and with an outer ring (3) which is mounted on the rolling bodies (4) in a manner so as to be rotatable about the inner ring (2) and which has fastening means (10) for holding an add-on part, wherein the outer ring (3) comprises a ring body (7a) and a sheet-metal running face insert (7b) which at least partially covers the inner face (8) of the ring body (7a), wherein the running face insert (7b) has at least one outer running face (9) for the rolling bodies (4), and wherein the running face insert (7b) is pressed into the ring body (7a),
**characterized in that** the running face insert (7b) has, at at least one axial end, a plurality of notches (17) distributed over the circumference of the running face insert.

2. Roller bearing unit (1) according to Claim 1, **characterized in that** the running face insert (7b) is supported axially on both sides against in each case at least one radially inwardly projecting axial stop (14) of the ring body (7a).

3. Roller bearing unit (1) according to Claim 1 or 2, **characterized in that** the inner face (8) of the ring body (7a) has at least one lug (18) which engages in the notch (17) in order to secure the running face insert (7b) against rotation.

4. Roller bearing unit (1) according to Claim 1 or 2, **characterized in that** the inner face (8) of the ring body (7a) has at least one depression (19) which is in engagement with an edge of the notch (17) in order to secure the running face insert (7b) against rotation.

5. Roller bearing unit (1) according to one of Claims 1 to 4, **characterized in that** the running face insert (7b) is produced from roller bearing steel, in particular 100 Cr6.

6. Roller bearing unit (1) according to one of Claims 1 to 5, **characterized in that** the ring body (7a) is in the form of a cast component, in particular made from cast steel.

7. Roller bearing unit (1) according to one of Claims 1 to 6, **characterized in that** the or each running face (9) of the running face insert (7b) is produced by sheet-metal forming.

8. Roller bearing unit (1) according to one of Claims 1 to 7, **characterized in that** the inner ring (2) and the running face insert (7b) each have two running faces (6, 9) which are arranged axially next to each other and are positioned at an angle to each other.

## Revendications

1. Unité de palier à roulement (1) pour une machine agricole,
comprenant une bague intérieure (2) sur laquelle est réalisée au moins une surface de roulement intérieure (6),
une pluralité de corps de roulement (4) qui sont répartis dans la direction périphérique sur la surface de roulement (6) de la bague intérieure (2),
et une bague extérieure (3) qui est supportée de manière à pouvoir tourner sur les corps de roulement (4) autour de la bague intérieure (2) et qui présente des moyens de fixation (10) pour la fixation d'un composant rapporté,
la bague extérieure (3) comprenant un corps annulaire (7a) et un insert de surface de roulement (7b) en tôle recouvrant au moins en partie la surface intérieure (8) du corps annulaire (7a), l'insert de surface de roulement (7b) présentant au moins une surface de roulement extérieure (9) pour les corps de roulement (4) et l'insert de surface de roulement (7b) étant pressé dans le corps annulaire (7a),
**caractérisé en ce que** l'insert de surface de roulement (7b), à au moins une extrémité axiale, présente plusieurs encoches (17) réparties sur la périphérie de l'insert de surface de roulement.

2. Unité de palier à roulement (1) selon la revendication 1,
**caractérisée en ce que**
l'insert de surface de roulement (7b) est supporté axialement des deux côtés contre à chaque fois au moins une butée axiale (14) du corps annulaire (7a) saillant radialement vers l'intérieur.

3. Unité de palier à roulement (1) selon la revendication 1 ou 2,
**caractérisée en ce que**
le corps annulaire (7a) présente, au niveau de sa surface intérieure (8), au moins un ergot (18) qui s'engage dans l'encoche (17) pour la fixation en rotation de l'insert de surface de roulement (7b).

4. Unité de palier à roulement (1) selon la revendication 1 ou 2,
**caractérisée en ce que**
le corps annulaire (7a) présente, au niveau de sa surface intérieure (8), au moins un renfoncement (19) qui s'engage avec un bord de l'encoche (17) pour la fixation en rotation de l'insert de surface de roulement (7b).

5. Unité de palier à roulement (1) selon l'une quelconque des revendications 1 à 4,
**caractérisée en ce que**
l'insert de surface de roulement (7b) est fabriqué à partir d'un acier pour paliers à roulement, en particulier 100 Cr6.

6. Unité de palier à roulement (1) selon l'une quelconque des revendications 1 à 5,
**caractérisée en ce que**
le corps annulaire (7a) est réalisé sous forme de composant coulé, en particulier en acier coulé.

7. Unité de palier à roulement (1) selon l'une quelconque des revendications 1 à 6,
**caractérisée en ce que**
la ou chaque surface de roulement (9) de l'insert de surface de roulement (7b) est fabriquée par façonnage de tôle.

8. Unité de palier à roulement (1) selon l'une quelconque des revendications 1 à 7,
**caractérisée en ce que**
la bague intérieure (2) et l'insert de surface de roulement (7b) présentent chacun deux surfaces de roulement (6, 9) disposées axialement l'une à côté de l'autre et inclinées l'une par rapport à l'autre suivant un certain angle.
